# EUROPEAN PATENT APPLICATION

(11) **EP 4 749 665 A1**
(43) Date of publication of application: **27.05.2026**
(21) Application number: 24845423.3
(22) Date of filing: 11.07.2024
(51) Int. Cl.: H01B 13/00, H01B 1/06, H01B 1/10, H01M 10/0562

(54) **METHOD FOR PRODUCING SULFIDE SOLID ELECTROLYTE**

(30) Priority: 21.07.2023 JP 2023119364
(71) Applicant: AGC INC., Chiyoda-ku, Tokyo 1008405 (JP)
(72) Inventor: OMORI Norifumi, Tokyo 100-8405 (JP); IMOTO Yuji, Tokyo 100-8405 (JP)
(74) Representative: Müller-Boré & Partner Patentanwälte PartG mbB
(86) International application number: PCT/JP2024/025083
(87) International publication number: WO 2025/023042

(57) **Abstract**

The present invention pertains to a method for producing a sulfide solid electrolyte, the method comprising: introducing sulfide solid electrolyte raw materials into a heated furnace body and mixing the same to obtain a mixture of the sulfide solid electrolyte raw materials, or introducing a mixture of sulfide solid electrolyte raw materials into a heated furnace body; and heating and melting the mixture of the sulfide solid electrolyte raw materials, and cooling and solidifying the obtained melt to obtain a sulfide solid electrolyte, wherein the mixture of the sulfide solid electrolyte raw materials contains Li₂S and P₂S₅, and when the volume-based average particle diameter of Li₂S, as measured by the laser diffraction-type particle size distribution measurement method, is defined as A and the volume-based average particle diameter of P₂S₅, as measured by the laser diffraction-type particle size distribution measurement method, is defined as B, A≥50 µm and B≥50 µm are satisfied.

## Description

### TECHNICAL FIELD

The present invention relates to a method for producing a sulfide solid electrolyte.

### BACKGROUND ART

Lithium ion secondary batteries are widely used in portable electronic devices such as a mobile phone and a notebook computer. In the related art, a liquid electrolyte has been used in a lithium ion secondary battery. On the other hand, in recent years, an all-solid-state lithium ion secondary battery in which a solid electrolyte is used as an electrolyte of the lithium ion secondary battery has attracted attention from the viewpoint that improvement of safety, highspeed charging and discharging, and a reduction in size of a case can be expected. Examples of the solid electrolyte used in the all-solid-state lithium ion secondary battery include a sulfide solid electrolyte.

In the case of producing the sulfide solid electrolyte by a melting method, aggregation of raw material particles may occur when the mixed raw materials are heated in a heating furnace. In particular, since P₂S₅, which is one of the raw materials, has a low melting point and the particles easily adhere to each other even at a low temperature, there is a problem that the raw material particles aggregate in a supply portion (particularly in the vicinity of a charging port) to the heating furnace, so that the supply portion is clogged and the mixed raw materials cannot be stably supplied to the heating furnace.

In contrast, for example, in a method disclosed in Patent Literature 1, a composite compound containing lithium, phosphorus, and sulfur is synthesized in advance, the melting point is increased by performing heating and melting using the composite compound as a raw material, and the composite compounds are less likely to adhere to each other, so that aggregation and clogging can be prevented.

In a method disclosed in Patent Literature 2, by compressing a solid raw material to form a compact and then performing heating and melting, volatilization of the raw material can be prevented, and thus a sulfide solid electrolyte can be synthesized while preventing aggregation and clogging due to volatilization of the raw material.

### CITATION LIST

### PATENT LITERATURE

Patent Literature 1: JP2012-043654A
Patent Literature 2: JP5640665B

### SUMMARY OF INVENTION

### TECHNICAL PROBLEM

However, in the method disclosed in Patent Literature 1, since it is necessary to synthesize the composite compound in advance, production steps are complicated.

In the method disclosed in Patent Literature 2, since the entire compact is solidified during heating and it is difficult to charge the compact, the above problem cannot be solved. In addition, in the method disclosed in Patent Literature 2, since it is necessary to compress the raw material, the facility structure is very complicated, and thus it is difficult to produce a large number of solid electrolytes.

In view of the above, an object of the present invention is to provide a method for stably producing a sulfide solid electrolyte while preventing aggregation and clogging due to raw materials in producing a sulfide solid electrolyte by a melting method.

### SOLUTION TO PROBLEM

As a result of intensive studies, the present inventors have found that when an average particle diameter of Li₂S and an average particle diameter of P₂S₅ used as sulfide solid electrolyte raw materials are set to predetermined values or more, aggregation and clogging due to the raw materials can be prevented, and a sulfide solid electrolyte can be stably produced, and have completed the present invention.

That is, the present invention relates to a method for producing a sulfide solid electrolyte including: charging sulfide solid electrolyte raw materials into a heated furnace and performing mixing to obtain a mixture of sulfide solid electrolyte raw materials, or charging a mixture of sulfide solid electrolyte raw materials into a heated furnace; and heating and melting the mixture of sulfide solid electrolyte raw materials, and cooling and solidifying resulting melt to obtain a sulfide solid electrolyte, in which the mixture of sulfide solid electrolyte raw materials contains Li₂S and P₂S₅, and A ≥ 50 µm and B ≥ 50 µm are satisfied, where A is a volume-based average particle diameter of the Li₂S as measured by using a laser diffraction particle size distribution measurement method, and B is a volume-based average particle diameter of the P₂S₅ as measured by using the laser diffraction particle size distribution measurement method.

### ADVANTAGEOUS EFFECTS OF INVENTION

According to the present invention, it is possible to prevent aggregation and clogging due to sulfide solid electrolyte raw materials, and to stably produce a sulfide solid electrolyte.

### BRIEF DESCRIPTION OF DRAWINGS

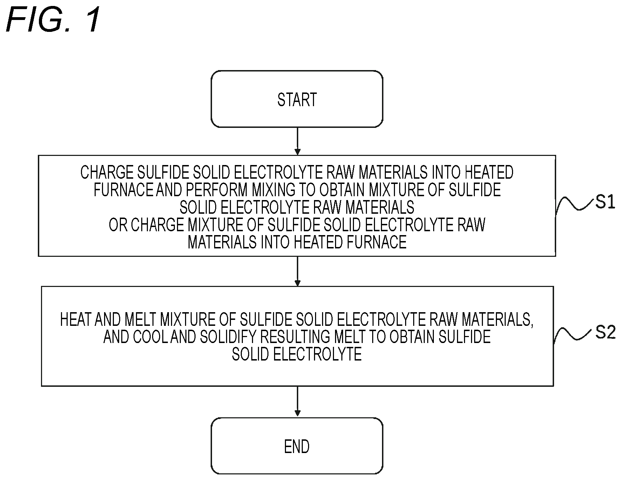

FIG. 1 is a flow diagram showing a method for producing a sulfide solid electrolyte according to the present embodiment.

### DESCRIPTION OF EMBODIMENTS

Hereinafter, the present invention is described in detail, but the present invention is not limited to the following embodiment, and can be freely modified and implemented without departing from the gist of the present invention.

"To" indicating a numerical range is used to include numerical values written before and after it as a lower limit value and an upper limit value.

### <<Method for Producing Sulfide Solid Electrolyte>>

A production method according to the present embodiment is a method for producing a sulfide solid electrolyte including: charging sulfide solid electrolyte raw materials into a heated furnace and performing mixing to obtain a mixture of sulfide solid electrolyte raw materials, or charging a mixture of sulfide solid electrolyte raw materials into a heated furnace; and heating and melting the mixture of sulfide solid electrolyte raw materials, and cooling and solidifying resulting melt to obtain a sulfide solid electrolyte, in which the mixture of sulfide solid electrolyte raw materials contains Li₂S and P₂S₅, and A ≥ 50 µm and B ≥ 50 µm are satisfied, where A is a volume-based average particle diameter of the Li₂S as measured by using a laser diffraction particle size distribution measurement method, and B is a volume-based average particle diameter of the P₂S₅ as measured by using the laser diffraction particle size distribution measurement method.

As shown in FIG. 1, the production method according to the present embodiment includes the following steps.

(Step S1) a step of charging sulfide solid electrolyte raw materials into a heated furnace and performing mixing to obtain a mixture of sulfide solid electrolyte raw materials, or a step of charging a mixture of sulfide solid electrolyte raw materials into a heated furnace

(Step S2) a step of heating and melting the mixture of sulfide solid electrolyte raw materials, and cooling and solidifying resulting melt to obtain a sulfide solid electrolyte

Hereinafter, each step is described.

### <Step S1: Step of Charging Sulfide Solid Electrolyte Raw Materials into Heated Furnace and Performing Mixing to Obtain Mixture of Sulfide Solid Electrolyte Raw Materials, or Step of Charging Mixture of Sulfide Solid Electrolyte Raw Materials into Heated Furnace>

The production method according to the present embodiment includes a step of charging sulfide solid electrolyte raw materials or a mixture of sulfide solid electrolyte raw materials into a heated furnace. Here, "charging sulfide solid electrolyte raw materials or a mixture of sulfide solid electrolyte raw materials into a heated furnace" means that the charging of the sulfide solid electrolyte raw materials or the mixture of sulfide solid electrolyte raw materials may be started in a state where the furnace is heated, or the heating of the furnace may be started during the charging of the sulfide solid electrolyte raw materials or the mixture of sulfide solid electrolyte raw materials.

A temperature of the heated furnace is preferably 500°C to 1,000°C, for example. The temperature of the heated furnace is preferably 500°C or higher, more preferably 550°C or higher, particularly preferably 600°C or higher, and is preferably 1,000°C or lower, more preferably 950°C or lower, particularly preferably 900°C or lower.

As the furnace in the heating furnace used for heating and melting, a well known furnace including a supply portion for supplying a raw material to the furnace, a heating unit, and a discharging portion for discharging the melt obtained by heating and melting the raw materials can be appropriately used, and a material and a size of the furnace can be freely selected.

In the step S1, the sulfide solid electrolyte raw materials may be charged into the heated furnace and mixed to obtain a mixture of sulfide solid electrolyte raw materials, or a mixture of sulfide solid electrolyte raw materials may be charged into the heated furnace. Among these, from the viewpoint of improving homogeneity of the obtained sulfide solid electrolyte, it is preferable to charge the mixture into the heating furnace and perform the heating and melting.

In the case of charging the raw materials into the heating furnace to obtain the mixture and then performing heating and melting to be described later, for example, a charging ratio of the raw materials may be appropriately determined according to the composition of the target sulfide solid electrolyte. In the case of charging the mixture obtained by mixing the raw materials into the heating furnace and then performing heating and melting to be described later, for example, a mixing ratio of the raw materials may be appropriately determined according to the composition of the target sulfide solid electrolyte.

Hereinafter, the sulfide solid electrolyte raw materials and the mixture of sulfide solid electrolyte raw materials are described in detail.

### · Mixture of Sulfide Solid Electrolyte Raw Materials

The mixture (hereinafter, also referred to as the present mixture) of sulfide solid electrolyte raw materials (hereinafter, also referred to as the present raw materials) contains at least Li₂S and P₂S₅. The present mixture may be obtained by mixing at least a powder of Li₂S as one of the raw materials contained in the present raw materials and a powder of P₂S₅ as one of the raw materials contained in the present raw materials.

In the production method according to the present embodiment, A ≥ 50 µm and B ≥ 50 µm are satisfied, where A is a volume-based average particle diameter of Li₂S contained in the present mixture as measured by using a laser diffraction particle size distribution measurement method, and B is a volume-based average particle diameter of P₂S₅ contained in the present mixture as measured by using the laser diffraction particle size distribution measurement method. Accordingly, aggregation and clogging due to the raw materials can be prevented, and the sulfide solid electrolyte can be stably produced. This is presumed to be due to the following mechanism.

The sulfide solid electrolyte raw materials easily form a large block by coming into contact with each other and colliding or being pressed against each other. In the present description, this large block is referred to as a compact. In particular, when a particle diameter of the sulfide solid electrolyte is small, the compact is easily formed by closely packing with each other. When the raw materials are brought into contact with each other or collide with a wall surface to form a compact during charging, P₂S₅ having a low melting point in the raw materials is melted and solidified and adheres, and thus the clogging more easily occurs. On the other hand, by increasing the average particle diameters of Li₂S and P₂S₅ in the mixture of sulfide solid electrolyte raw materials to the predetermined values or more, a contact area between the raw material particles can be reduced, the formation of a compact can be prevented, and the aggregation and clogging due to the raw materials in the supply portion can be prevented. Therefore, it is believed that the raw materials can be stably charged into the heating furnace, and thus the sulfide solid electrolyte can be stably produced. The production method according to the present embodiment is not construed as being limited to the above mechanism.

In addition, by increasing the average particle diameters of P₂S₅ and Li₂S to the predetermined values or more, the temperature of P₂S₅ is less likely to increase when charging the raw materials into the heating furnace, and the aggregation and clogging can be prevented.

Furthermore, by increasing the average particle diameters of P₂S₅ and Li₂S to the predetermined values or more, when charging the raw materials into the heating furnace, the raw materials are easily charged into the melt without being scattered around, and thus a composition ratio of the obtained sulfide solid electrolyte is easily maintained in a desired range.

In the production method according to the present embodiment, the A is 50 µm or more (A ≥ 50 µm). The A is preferably 80 µm or more, and more preferably 100 µm or more. The A is preferably 2,000 µm or less (A ≤ 2,000 µm), and more preferably 1,500 µm or less. The A is preferably 50 µm or more and 2,000 µm or less (50 µm ≤ A ≤ 2,000 µm).

In the production method according to the present embodiment, the B is 50 µm or more (B ≥ 50 µm). The B is preferably 80 µm or more, and more preferably 100 µm or more. The B is preferably 2,000 µm or less (B ≤ 2,000 µm), and more preferably 1,500 µm or less. The B is preferably 50 µm or more and 2,000 µm or less (50 µm ≤ B ≤ 2,000 µm).

A ratio (A/B) of A to B is not particularly limited, and may be in a range of 50/2000 to 2000/50.

The volume-based average particle diameters of Li₂S and P₂S₅ in the present mixture as measured by using the laser diffraction particle size distribution measurement method means an average particle diameter in a powder of Li₂S or a powder of P₂S₅ as one of the raw materials measured before mixing, and can be measured using, for example, MT3000II (manufactured by Microtrac). The average particle diameter means a D50 in a volume-based particle diameter distribution as measured by using the laser diffraction particle size distribution measurement method.

The present mixture preferably contains a lithium halide (LiHa) to be described later. That is, the present mixture is preferably obtained by mixing the powder of Li₂S, the powder of P₂S₅, and a powder of LiHa as one of the raw materials contained in the present raw materials.

In this case, a volume-based average particle diameter of the powder of LiHa as measured by using the laser diffraction particle size distribution measurement method is preferably 0.1 µm to 2,000 µm. The average particle diameter is preferably 0.1 µm or more, more preferably 1 µm or more, and particularly preferably 2 µm or more. The average particle diameter is more preferably 2,000 µm or less, still more preferably 1,750 µm or less, and particularly preferably 1,500 µm or less.

It is preferable that the present mixture itself has a volume-based average particle diameter of 50 µm or more as measured by using the laser diffraction particle size distribution measurement method. It is believed that, by increasing the average particle diameter of the present mixture itself to the predetermined value or more, the contact area between the raw material particles can be reduced and the formation of the compact can be prevented, so that the aggregation and clogging due to the raw materials in the supply portion to the heating furnace can be prevented, the raw materials can be stably charged, and thus the sulfide solid electrolyte can be stably produced. The average particle diameter is more preferably 80 µm or more, particularly preferably 100 µm or more, and is more preferably 2,000 µm or less, more preferably 1,750 µm or less, particularly preferably 1,500 µm or less. The average particle diameter is preferably 50 µm or more and 2,000 µm or less.

As the present raw materials, as long as Li₂S and P₂S₅ described above are contained, one or a plurality of other various raw materials can be used, and may be appropriately determined according to the composition of the desired sulfide solid electrolyte. The sulfide solid electrolyte obtained using these raw materials may also be various sulfide solid electrolytes.

Each raw material contained in the present raw materials may be synthesized, or a commercially available product may be used. Each raw material may be powdery, and the present raw materials including the raw materials may also be powdery. Further, the present raw materials may each be subjected to a known pretreatment. That is, the production method according to the present embodiment may appropriately include, as a step 0, which is a step of preparing the present raw materials, at least one of a step of producing the present raw materials and a step of performing a pretreatment on at least a part of the present raw materials before a step S1.

One of the raw materials contained in the present raw materials includes, for example, a substance such as an alkali metal element (R) and a sulfur element (S). Examples of the alkali metal element (R) include substances such as a lithium element (Li), a sodium element (Na), and a potassium element (K). In the case where the sulfide solid electrolyte is applied to a lithium ion secondary battery, the alkali metal element (R) preferably includes a substance such as a lithium element (Li).

As an alkali metal element (R) source, substances containing an alkali metal element such as an elemental alkali metal element and compounds containing an alkali metal element can be appropriately combined and used. In the case where the alkali metal element (R) is a lithium element (Li), a Li-containing substance such as elemental Li or a Li-containing compound can be appropriately used in combination as a lithium element source. As described above, the present raw materials contain at least Li₂S, which can be the lithium element (Li) source.

Examples of the lithium element (Li)-containing substance include lithium compounds such as lithium iodide (LiI), lithium carbonate (Li₂CO₃), lithium sulfate (Li₂SO₄), lithium oxide (Li₂O), and lithium hydroxide (LiOH) in addition to lithium sulfide (Li₂S) descried above, and metal lithium. The lithium element (Li)-containing substance may be used alone or in combination of two or more kinds thereof.

As the lithium element (Li)-containing substance, it is preferable to use lithium sulfide from the viewpoint of obtaining a sulfide material. In the case where the obtained sulfide solid electrolyte contains a halogen element, a lithium halide (LiHa, Ha is a halogen element) is also preferred as the lithium element (Li)-containing substance. The lithium halide is to be described later.

As a sulfur element (S) source, S-containing substances such as elemental S and a S-containing compound can be appropriately combined and used. The sulfur element (S)-containing substance may be used alone or in combination of two or more kinds thereof. As described above, the present raw materials contain at least Li₂S and P₂S₅, which can be the sulfur element (S) source. Li₂S is a compound serving as both the sulfur element (S)-containing substance and the lithium element (Li)-containing substance described above. P₂S₅ is a compound serving as both the sulfur element (S)-containing substance and a phosphorus element (P)-containing substance to be described later.

Examples of the sulfur element (S)-containing substance include phosphorus sulfides such as phosphorus trisulfide (P₂S₃) in addition to phosphorus pentasulfide (P₂S₅), other sulfur compounds containing phosphorus, elemental sulfur, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS).

From the viewpoint of improving an ion conductivity and the like of the obtained sulfide solid electrolyte, it is preferable that the present raw materials further contain a phosphorus element (P). As a phosphorus element (P) source, P-containing substances such as elemental P and a P-containing compound can be appropriately combined and used. The phosphorus element (P)-containing substance may be used alone or in combination of two or more kinds thereof. As described above, the present raw materials contain at least P₂S₅, which can be the phosphorus element (P) source.

Examples of the phosphorus element (P)-containing substance include phosphorus sulfides such as phosphorus trisulfide (P₂S₃) in addition to phosphorus pentasulfide (P₂S₅) described above, phosphorus compounds such as sodium phosphate (Na₃PO₄), and elemental phosphorus.

In the case of charging the present mixture obtained by mixing the present raw materials into the heating furnace and then performing the heating and melting, for example, a mixing ratio of the present raw materials may be appropriately determined according to the composition of the target sulfide solid electrolyte. In the case of charging the present raw materials into the heating furnace to obtain the present mixture and then performing the heating and melting, for example, a charging ratio of the present raw materials may be appropriately determined according to the composition of the target sulfide solid electrolyte.

The mixing ratio or the charging ratio of the present raw materials is not particularly limited. For example, a molar ratio S/R of the sulfur element (S) to the alkali metal element (R) in the present mixture is preferably 0.65/0.35 or less, and more preferably 0.5/0.5 or less, from the viewpoint of improving the ion conductivity and the like of the obtained sulfide solid electrolyte.

In the case of charging the present mixture obtained by mixing the present raw materials into the heating furnace, it is preferable to obtain the mixture by mixing at a predetermined stoichiometric ratio according to the present raw materials.

A mixing method for mixing the present raw materials to obtain the present mixture is not particularly limited, and examples thereof include mixing in a mortar, mixing using a medium such as a planetary ball mill, and medium-less mixing such as a pin mill, a powder stirrer, and air flow mixing.

Examples of a combination of the alkali metal element-containing substance and the sulfur element-containing substance when mixing or charging the present raw materials include a combination of Li₂S and P₂S₅, and a combination of Li₂S, P₂S₅, and LiHa in the case where the obtained sulfide solid electrolyte contains a halogen element as a constituent element.

In the combination of Li₂S and P₂S₅, a molar ratio Li/P of Li to P is preferably 40/60 to 88/12, and more preferably 50/50 to 88/12. When the mixing ratio or the charging ratio is adjusted such that the amount of P₂S₅ is relatively smaller than the amount of Li₂S, it is easier to prevent volatilization of the sulfur component and the phosphorus component during a heat treatment due to a lower boiling point of P₂S₅ compared to a melting point of Li₂S.

On the other hand, since lithium sulfide is expensive, a lithium compound other than lithium sulfide, metal lithium, or the like may be used in addition to lithium sulfide, from the viewpoint of reducing a production cost of the sulfide solid electrolyte.

In this case, the raw material includes metal lithium, a lithium halide (LiHa), lithium carbonate (Li₂CO₃), lithium sulfate (Li₂SO₄), lithium oxide (Li₂O), or lithium hydroxide (LiOH) as a Li-containing substance. These may be used alone or in combination of two or more kinds thereof.

The present raw materials may further contain substances (compounds and the like) in addition to the above substances depending on the composition of the target sulfide solid electrolyte or as additives or the like. For example, in the case of producing a sulfide solid electrolyte containing a halogen element such as F, Cl, Br or I, the raw materials preferably contain a halogen element (Ha). In this case, a halogen element-containing compound is preferably contained as the present raw materials.

Examples of the halogen element-containing compound include lithium halides such as lithium fluoride (LiF), lithium chloride (LiCl), lithium bromide (LiBr), and lithium iodide (LiI), a phosphorus halide, a phosphoryl halide, a sulfur halide, a sodium halide, and a boron halide. Among these, from the viewpoint of reactivity, a lithium halide is preferred, LiCl, LiBr, and LiI are more preferred, and LiCl and LiBr are still more preferred. These compounds may be used alone or in combination of two or more kinds thereof.

An alkali metal halide such as a lithium halide is also a compound containing an alkali metal element such as Li, and thus can be the alkali metal element (R) source in the present raw materials.

In the case where the present mixture contains the halogen element (Ha) and the phosphorus element (P), a molar equivalent of the halogen element (Ha) to the phosphorus element (P) in the present mixture is preferably 0.2 to 4 molar equivalents, and more preferably 0.5 to 3 molar equivalents. Here, the molar equivalent of the halogen element is preferably 0.2 molar equivalents or more, and more preferably 0.5 molar equivalents or more, from the viewpoint of improving the ion conductivity and the like of the obtained sulfide solid electrolyte. The molar equivalent of the halogen element is preferably 4 molar equivalents or less, and more preferably 3 molar equivalents or less, from the viewpoint of stability of the obtained sulfide solid electrolyte. In the case where the powder raw material contains two or more kinds of halogen elements, a total content thereof preferably satisfies the above molar equivalent range.

The sulfide solid electrolyte obtained by the production method according to the present embodiment may be amorphous depending on the purpose. In the case where the sulfide solid electrolyte to be obtained has an amorphous phase, it is preferable to contain a sulfide such as SiS₂, B₂S₃, GeS₂, or Al₂S₃ as the present raw materials from the viewpoint of easily forming an amorphous phase and reducing a facility load even when a rapid cooling rate during rapid cooling is reduced. These may be used alone or in combination of two or more kinds thereof.

From the viewpoint of imparting moisture resistance to the obtained sulfide solid electrolyte, it is preferable to contain an oxide such as SiO₂, B₂O₃, GeO₂, Al₂O₃, or P₂O₅ as the present raw materials. These may be used alone or in combination of two or more kinds thereof.

In the case of charging the present mixture into the heating furnace, the sulfide and the oxide may be contained together in the mixture, or may be separately added during heating.

An addition amount of the sulfide and the oxide is preferably 0.1 mass% to 50 mass%, and more preferably 0.5 mass% to 40 mass%, with respect to a total of the present raw materials. Here, the addition amount is preferably 0.1 mass% or more, more preferably 0.5 mass% or more, and is preferably 50 mass% or less, more preferably 40 mass% or less.

The present mixture may further contain a compound to be a crystal nucleus to be described later.

The production method according to the present embodiment has an object of preventing aggregation and clogging due to a low melting point of P₂S₅ and easy adhesion of the particles to each other even at a low temperature, but also has an effect of preventing the aggregation and clogging due to a compound having a low melting point other than P₂S₅. Examples of the compound having a low melting point other than P₂S₅ include LiI, B₂S₃, S, Se, and Sb₂S₃. Therefore, the production method according to the present embodiment is also effective in producing a sulfide solid electrolyte using the present raw materials containing the compound having a low melting point together with P₂S₅.

### <Step S2: Step of Heating and Melting Mixture of Sulfide Solid Electrolyte Raw Materials, and Cool and Solidify Resulting Melt to Obtain Sulfide Solid Electrolyte>

### · Heating and Melting

In the step S2 in the present embodiment, the present raw materials or the present mixture in the above step S1 is charged into the heating furnace, the present raw materials are mixed as necessary to obtain the present mixture, and then the present mixture is heated and melted.

A temperature in the heating and melting is not particularly limited as long as the present mixture is melted, and is preferably 600°C or higher, more preferably 600°C to 1,000°C, still more preferably 630°C to 950°C, even more preferably 650°C or higher and lower than 900°C, and particularly preferably 650°C or higher and lower than 850°C. Here, the temperature in the heating and melting preferably 600°C or higher, more preferably 630°C or higher, and still more preferably 650°C or higher, from the viewpoint of homogenizing the melt in a short time. The temperature in the heating and melting is preferably 1,000°C or lower, more preferably 950°C or lower, still more preferably lower than 900°C, and particularly preferably lower than 850°C, from the viewpoint of preventing deterioration or decomposition of components in the melt.

The temperature in the heating and melting is the temperature of the melt generated in the furnace, and can be adjusted by the heating unit provided in the furnace.

A time for the heating and melting is not particularly limited as long as the present mixture is melted, and may be, for example, 0.5 hours or longer, 1 hour or longer, or 2 hours or longer.

A pressure during the heating and melting is not particularly limited as long as the present mixture is melted, and for example, a normal pressure or a slight pressure is preferred, and a normal pressure is more preferred.

From the viewpoint of preventing side reactions of the melt with water vapor, oxygen, and the like during the heating and melting, a dew point in the furnace is preferably -20°C or lower. A lower limit of the dew point is not particularly limited, and is generally -80°C or higher. An oxygen concentration in the furnace is preferably 1,000 ppm by volume or less.

The heating and melting is preferably performed in a sulfur element-containing gas atmosphere. By heating and melting the present mixture in the sulfur element-containing gas atmosphere, sulfur is introduced into the obtained melt, making it possible to prevent a change in sulfur composition due to volatilization. Examples of the sulfur element-containing gas include a gas containing a compound containing the sulfur element or elemental sulfur, such as a sulfur gas, a hydrogen sulfide gas, and a carbon disulfide gas.

The sulfur element-containing gas atmosphere may be obtained by supplying a sulfur source into the melt obtained by heating and melting the present mixture and heating the sulfur source to generate a sulfur element-containing gas. In this case, the sulfur source is not particularly limited as long as it is elemental sulfur or a sulfur compound from which the sulfur element-containing gas can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and a rubber subjected to a sulfur vulcanization treatment. The sulfur source is preferably a sulfur powder.

As another method, the sulfur element-containing gas atmosphere may be obtained by introducing a sulfur vapor obtained in advance into the furnace. For example, sulfur is heated at 200°C to 450°C to generate a sulfur vapor, and an inert gas such as a N₂ gas, an argon gas, or a helium gas is used as a carrier gas to transport the sulfur vapor into the furnace to obtain the sulfur element-containing gas atmosphere.

As still another method, the sulfur element-containing gas atmosphere may be obtained by incorporating the sulfur source into the present mixture. Accordingly, when heating and melting the present mixture, the sulfur source is also heated, so that the present raw materials can be heated and melted in the generated sulfur element-containing gas atmosphere.

In the present production method, for obtaining the above sulfur element-containing gas atmosphere, any one of the methods may be used, or a plurality of methods may be used in combination.

### · Cooling and Solidification

Subsequently, the melt obtained by the heating and melting is cooled and solidified to obtain a sulfide solid electrolyte. By cooling the melt, a solid sulfide solid electrolyte is obtained.

The melt obtained by the heating and melting is discharged through the discharging portion provided in the furnace at any timing, and the production method proceeds to a step of cooling and solidifying the melt. The cooling of the melt can be performed by a known method and is not particularly limited. For example, from the viewpoint of increasing a cooling rate, cooling using a twin roller, which is generally said to have the highest rapid cooling rate, is preferred.

The cooling rate is preferably 0.01°C/sec or more, more preferably 0.05°C/sec or more, and still more preferably 0.1°C/sec or more, from the viewpoint of maintaining the composition of the melt obtained above. The upper limit value of the cooling rate is not particularly limited, and the cooling rate of the twin roller is, for example, 1,000,000°C/sec or less.

When it is desired to obtain an amorphous sulfide solid electrolyte, it is preferable to perform rapid cooling at a higher cooling rate. The cooling rate during the rapid cooling is preferably 10°C/sec or more, more preferably 100°C/sec or more, still more preferably 500°C/sec or more, and particularly preferably 700°C/sec or more. The upper limit value of the cooling rate during the rapid cooling is not particularly limited, and the cooling rate of the twin roller is, for example, 1,000,000°C/sec or less.

On the other hand, a sulfide solid electrolyte having a crystal phase may be obtained by slow cooling in the cooling and solidification step. The sulfide solid electrolyte may have a crystal phase and an amorphous phase.

A cooling rate in the case of the slow cooling is preferably 0.01°C/sec to 500°C/sec, and more preferably 0.05°C/sec to 450°C/sec. The cooling rate may be 0.01°C/sec to 10°C/sec or 0.05°C/sec to 5°C/sec.

Here, the cooling rate is preferably 0.01°C/sec or more, more preferably 0.05°C/sec or more, and is preferably 500°C/sec or less, more preferably 450°C/sec or less. The cooling rate may be 10°C/sec or less or 5°C/sec or less. The cooling rate may be appropriately adjusted according to crystallization conditions.

A crystal of the sulfide solid electrolyte is preferably an ion conductive crystal. Specifically, in the case where a carrier is a lithium ion, the ion conductive crystal is preferably a crystal having a lithium ion conductivity of more than 1.0 × 10⁻⁴ S/cm, and the lithium ion conductivity is more preferably more than 1.0 × 10⁻³ S/cm.

When it is desired to obtain the sulfide solid electrolyte having a crystal phase, it is preferable to contain a compound to be a crystal nucleus in the obtained melt in order to facilitate precipitation of crystals.

The method of incorporating the compound to be a crystal nucleus into the melt is not particularly limited, and examples thereof include a method of adding the compound to be a crystal nucleus to the present mixture in the step S1, and a method of directly adding the compound to be a crystal nucleus to the melt during the heating and melting.

Examples of the compound to be a crystal nucleus include oxides, oxynitrides, nitrides, carbides, other chalcogen compounds, and halides. The compound to be a crystal nucleus is preferably a compound having a certain degree of compatibility with the melt. A compound completely incompatible with the melt cannot serve as a crystal nucleus.

An addition amount of the compound to be a crystal nucleus with respect to the melt is preferably 0.01 mass% to 20 mass%, more preferably 0.1 mass% to 20 mass%, and still more preferably 1 mass% to 10 mass%. Here, the addition amount is preferably 0.01 mass% or more, more preferably 0.1 mass% or more, and still more preferably 1 mass% or more, from the viewpoint of suitably forming a crystal phase in the obtained sulfide solid electrolyte. The addition amount is preferably 20 mass% or less, and more preferably 10 mass% or less, from the viewpoint of preventing a decrease in lithium ion conductivity.

When it is desired to obtain a sulfide solid electrolyte having a large amount of an amorphous phase, the compound to be a crystal nucleus is not added to the melt, or even when the compound is added, the addition amount is preferably 1 mass% or less, and more preferably 0.1 mass% or less. The addition amount may be 0.01 mass% or less.

The cooling and solidification is preferably performed under a normal pressure. The normal pressure means that the pressure is not controlled during the cooling. Specifically, the pressure is about 0.8 atm to 1.2 atm.

In the production method according to the present embodiment, the sulfide solid electrolyte obtained in the step S2 may be heated again for a heat treatment. In the case where the sulfide solid electrolyte is amorphous or has an amorphous phase, the heat treatment may be particularly performed.

The lithium ion conductivity may be increased by rearranging ions in the crystal structure by the heat treatment.

The heat treatment refers to at least one of a heat treatment for crystallizing the obtained solid and a heat treatment for rearranging the ions in the crystal structure. That is, the heat treatment also includes a crystallization treatment by heating the amorphous sulfide solid electrolyte or the sulfide solid electrolyte having an amorphous phase.

In the production method according to the present embodiment, the step S1 and the step S2 are preferably performed as a continuous process. That is, it is preferable to continuously obtain the sulfide solid electrolyte by continuously charging the present raw materials or the present mixture into the furnace, mixing the present raw materials as necessary to obtain the present mixture, then heating and melting the present mixture, and thereafter shifting to a step of continuously discharging the obtained melt and cooling and solidifying the melt. In this manner, it is preferable to continuously produce the sulfide solid electrolyte.

By continuously producing the sulfide solid electrolyte, a series of steps of heating and melting the present mixture, and discharging and cooling and solidifying the melt are continuously performed, and a large number of sulfide solid electrolytes can be produced more efficiently in a short time.

In a more preferred embodiment of the continuous process, first, the present mixture is heated and melted in an amount that allows the melt obtained by heating and melting the present mixture to form at least a melt surface in the furnace. Here, the melt surface means a liquid surface formed by the melt covering the entire bottom surface of the furnace. Once the melt surface is formed in the furnace, the present raw materials or the present mixture to be additionally charged into the melt undergoes a rapid increase in temperature and is instantaneously melted. Therefore, according to the addition of the present raw materials or the present mixture, the melt is continuously and successively obtained, and the melt is continuously discharged and subjected to the cooling and solidification step, whereby the sulfide solid electrolyte is continuously obtained in a short time.

By continuous production of the sulfide solid electrolyte, a large number of sulfide solid electrolytes can be produced in a short time. The volatilization of the raw materials in the production steps can be prevented with the shortening in time of the production steps.

In the production method according to the present embodiment, the processes in the step S1 and the step S2 may be performed in a batch manner. The batch manner is a method in which the sulfide solid electrolyte raw materials or a mixture thereof is charged into a furnace, and then heated and melted to discharge the whole amount, and means a method in which all contents in the furnace are replaced every time the production method according to the present embodiment is performed.

### <Sulfide Solid Electrolyte>

Examples of the sulfide solid electrolyte obtained by the production method according to the present embodiment include a sulfide solid electrolyte containing elements of Li, P, and S, for example, a sulfide solid electrolyte having an LGPS crystal structure such as Li₁₀GeP₂S₁₂, a sulfide solid electrolyte having an argyrodite crystal structure such as Li_{g}PS₅Cl, Li_{5.4}PS_{4.4}Cl_{1.6}, and Li_{5.4}PS_{4.4}Cl_{0.8}Br_{0.8}, a Li-P-S-Ha-based (Ha represents at least one element selected from halogen elements) crystallized glass, and an LPS crystallized glass such as Li₇P₃S₁₁.

Depending on the purpose, the sulfide solid electrolyte may be an amorphous sulfide solid electrolyte, a sulfide solid electrolyte having a specific crystal structure, or a sulfide solid electrolyte having a crystal phase and an amorphous phase. The crystal phase is more preferably an argyrodite crystal phase from the viewpoint of the lithium ion conductivity.

From the viewpoint of the lithium ion conductivity, a sulfide solid electrolyte containing elements of Li, P, S, and Ha is preferred, and a sulfide solid electrolyte having a crystal phase is more preferred. The halogen element is preferably derived from one or more selected from the group consisting of lithium chloride, lithium bromide, and lithium iodide.

The lithium ion conductivity of the sulfide solid electrolyte is preferably 1.0 × 10⁻⁴ S/cm or more, more preferably 5.0 × 10⁻⁴ S/cm or more, still more preferably 1.0 × 10⁻³ S/cm or more, and particularly preferably 5.0 × 10⁻³ S/cm or more, from the viewpoint of battery properties when used in a lithium ion secondary battery.

The lithium ion conductivity in the present description is a value measured using an AC impedance measurement apparatus (for example, potentiostat/galvanostat VSP, manufactured by Bio-Logic Sciences Instruments) under the following conditions: measurement frequency: 100 Hz to 1 MHz, measurement voltage: 100 mV, measurement temperature: 25°C.

The obtained sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

The present invention is not limited to the above embodiment, and various modifications can be adopted within the scope of the present invention. For example, the present invention is not limited to the above embodiment, and may be modified and improved as appropriate. In addition, the material, shape, size, number, arrangement place, and the like of each component in the above embodiment are optional as long as the present invention can be achieved, and are not limited.

As described above, the following matters are disclosed in the present description.
1. A method for producing a sulfide solid electrolyte including:
   charging sulfide solid electrolyte raw materials into a heated furnace and performing mixing to obtain a mixture of sulfide solid electrolyte raw materials, or charging a mixture of sulfide solid electrolyte raw materials into a heated furnace; and
   heating and melting the mixture of sulfide solid electrolyte raw materials, and cooling and solidifying resulting melt to obtain a sulfide solid electrolyte,
   in which the mixture of sulfide solid electrolyte raw materials includes Li₂S and P₂S₅, and
   A ≥ 50 µm and B ≥ 50 µm are satisfied, where A is a volume-based average particle diameter of the Li₂S as measured by using a laser diffraction particle size distribution measurement method, and B is a volume-based average particle diameter of the P₂S₅ as measured by using the laser diffraction particle size distribution measurement method.
2. The method for producing a sulfide solid electrolyte according to the above 1, in which 50 µm ≤ A ≤ 2,000 µm and 50 µm ≤ B ≤ 2,000 µm are satisfied.
3. The method for producing a sulfide solid electrolyte according to the above 1 or 2, in which a volume-based average particle diameter of the mixture of sulfide solid electrolyte raw materials is 50 µm or more, as measured by using the laser diffraction particle size distribution measurement method.
4. The method for producing a sulfide solid electrolyte according to the above 3, in which the volume-based average particle diameter of the mixture of sulfide solid electrolyte raw materials is 2,000 µm or less, as measured by using the laser diffraction particle size distribution measurement method.
5. The method for producing a sulfide solid electrolyte according to any one of the above 1 to 4, in which a sulfur source is supplied into the melt obtained by heating and melting the mixture of sulfide solid electrolyte raw materials.
6. The method for producing a sulfide solid electrolyte according to any one of the above 1 to 5, in which a sulfur source is incorporated into the mixture of sulfide solid electrolyte raw materials, followed by heating and melting.
7. The method for producing a sulfide solid electrolyte according to any one of the above 1 to 6, in which the mixture of sulfide solid electrolyte raw materials is heated and melted at 600°C or higher.
8. The method for producing a sulfide solid electrolyte according to any one of the above 1 to 7, in which the sulfide solid electrolyte raw materials or the mixture of sulfide solid electrolyte raw materials is continuously charged into a furnace, heated and melted, and the resulting melt is continuously discharged to continuously obtain the sulfide solid electrolyte.

### EXAMPLES

Hereinafter, the present invention is specifically described with reference to Examples, but the present invention is not limited thereto. Example 1 is an Inventive Example, and Examples 2 and 3 are Comparative Examples.

### <Example 1>

### (Mixing of Raw Materials)

First, a Li₂S raw material, a P₂S₅ raw material, and a LiCl raw material were prepared. The D50 of each of the raw material powders of Li₂S, P₂S₅, and LiCl in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 719 µm, 892 µm, and 384 µm, respectively.

In a glove box adjusted to a nitrogen atmosphere environment at a dew point of -50°C, the raw material powders of Li₂S, P₂S₅, and LiCl were blended in order at a molar ratio of 1.9:0.5:1.6, and sufficiently stirred and mixed to obtain a mixed powder. The D50 of the mixed powder in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 480 µm.

### (Heating and Melting)

The obtained mixed powder weighing 1,000 g was charged into a hopper of a quantitative charging machine, and the charging machine was operated and the mixed powder was heated and melted at 700°C. The mixed powder was further continuously dropped into the obtained melt at a rate of 15 g/min. The mixed powder was continuously dropped for 120 minutes in total.

### <Example 2>

### (Mixing of Raw Materials)

Each of the raw material powders of Li₂S, P₂S₅, and LiCl used in Example 1 was pulverized under conditions at a rotation speed of 24,000 rpm for 300 sec using MX1100XTM manufactured by WARING. The D50 of each of the pulverized raw material powders of Li₂S, P₂S₅, and LiCl in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 12 µm, 10 µm, and 10 µm, respectively.

In a glove box adjusted to a nitrogen atmosphere environment at a dew point of -50°C, the raw material powders of Li₂S, P₂S₅, and LiCl were blended in order at a molar ratio of 1.9:0.5:1.6, and sufficiently stirred and mixed to obtain a mixed powder. The D50 of the mixed powder in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 12 µm.

### (Heating and Melting)

The mixed powder was heated and melted under the same conditions as in Example 1.

### <Example 3>

### (Mixing of Raw Materials)

The Li₂S powder used in Example 1 was pulverized under conditions at a rotation speed of 24,000 rpm for 300 sec using MX1100XTM manufactured by WARING. The D50 of each of the pulverized Li₂S powder, and the raw material powders of P₂S₅ and LiCl used in Example 1 in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 12 µm, 892 µm, and 384 µm, respectively.

In a glove box adjusted to a nitrogen atmosphere environment at a dew point of -50°C, the raw material powders of Li₂S, P₂S₅, and LiCl were blended in order at a molar ratio of 1.9:0.5:1.6, and sufficiently stirred and mixed to obtain a mixed powder. The D50 of the mixed powder in the volume-based particle diameter distribution was measured by a laser diffraction particle size distribution measurement method using MT3000II manufactured by Microtrack, using dibutyl ether as a measurement solvent, at a particle refractive index of 1.81 and a solvent refractive index of 1.353, and the D50 was 310 µm.

### (Heating and Melting)

The mixed powder was heated and melted under the same conditions as in Example 1.

In each example, when continuously charging the mixed raw materials, it was checked whether the entire amount could be discharged without clogging, and after cooling, the charging port was observed to check whether foreign matters adhered thereto. The results are shown in Table 1.

**[Table 1]**

| | Li₂S particle diameter (D50) | P₂S₅ particle diameter (D50) | LiCl particle diameter (D50) | Mixed raw material particle diameter (D50) | Whether whole amount can be discharged | Whether foreign matters adhere to charging port |
|---|---|---|---|---|---|---|
| Example 1 | 719 µm | 892 µm | 384 µm | 480 µm | Yes | No |
| Example 2 | 12 µm | 10 µm | 10 µm | 12 µm | No | Yes |
| Example 3 | 12 µm | 892 µm | 384 µm | 310 µm | No | Yes |

As can be seen from the results shown in Table 1, in Example 1 as an Inventive Example, since the D50 of Li₂S and P₂S₅ in the mixture of raw material powders was 50 µm or more, even when the mixed raw material was continuously charged, the whole amount could be discharged without clogging. In addition, no adhesion of foreign matters to the charging port was observed. That is, it was found that, in Example 1 as an Inventive Example, the sulfide solid electrolyte could be stably produced while preventing aggregation and clogging due to the raw materials.

On the other hand, in Examples 2 and 3, since the D50 of Li₂S and/or P₂S₅ in the mixture of raw material powders was less than 50 µm, clogging occurs by continuously charging the mixed raw material, and the whole amount could not be discharged.

Although various embodiments have been described above, it is needless to say that the present invention is not limited to such examples. It is obvious for a person skilled in the art that various modifications and variations can be made within the scope of claims and it is understood that such modifications and variations naturally belong to the technical scope of the present invention. Further, the components described in the above embodiment may be combined in any manner without departing from the gist of the invention.

The present application is based on a Japanese Patent Application (No. 2023-119364) filed on July 21, 2023, the content of which is incorporated herein by reference.

## Claims

1. A method for producing a sulfide solid electrolyte comprising:
charging sulfide solid electrolyte raw materials into a heated furnace and performing mixing to obtain a mixture of sulfide solid electrolyte raw materials, or charging a mixture of sulfide solid electrolyte raw materials into a heated furnace; and
heating and melting the mixture of sulfide solid electrolyte raw materials, and cooling and solidifying resulting melt to obtain a sulfide solid electrolyte,
wherein the mixture of sulfide solid electrolyte raw materials comprises Li₂S and P₂S₅, and
A ≥ 50 µm and B ≥ 50 µm are satisfied, where A is a volume-based average particle diameter of the Li₂S as measured by using a laser diffraction particle size distribution measurement method, and B is a volume-based average particle diameter of the P₂S₅ as measured by using the laser diffraction particle size distribution measurement method.

2. The method for producing a sulfide solid electrolyte according to claim 1, wherein 50 µm ≤ A ≤ 2,000 µm and 50 µm ≤ B ≤ 2,000 µm are satisfied.

3. The method for producing a sulfide solid electrolyte according to claim 1 or 2, wherein a volume-based average particle diameter of the mixture of sulfide solid electrolyte raw materials is 50 µm or more, as measured by using the laser diffraction particle size distribution measurement method.

4. The method for producing a sulfide solid electrolyte according to claim 3, wherein the volume-based average particle diameter of the mixture of sulfide solid electrolyte raw materials is 2,000 µm or less, as measured by using the laser diffraction particle size distribution measurement method.

5. The method for producing a sulfide solid electrolyte according to claim 1 or 2, wherein a sulfur source is supplied into the melt obtained by heating and melting the mixture of sulfide solid electrolyte raw materials.

6. The method for producing a sulfide solid electrolyte according to claim 1 or 2, wherein a sulfur source is incorporated into the mixture of sulfide solid electrolyte raw materials, followed by heating and melting.

7. The method for producing a sulfide solid electrolyte according to claim 1 or 2, wherein the mixture of sulfide solid electrolyte raw materials is heated and melted at 600°C or higher.

8. The method for producing a sulfide solid electrolyte according to claim 1 or 2, wherein the sulfide solid electrolyte raw materials or the mixture of sulfide solid electrolyte raw materials is continuously charged into a furnace, heated and melted, and the resulting melt is continuously discharged to continuously obtain the sulfide solid electrolyte.
